# EUROPÄISCHE PATENTSCHRIFT

(11) **EP 3 465 365 B1**
(45) Veröffentlichungstag und Bekanntmachung des Hinweises auf die Patenterteilung: **05.10.2022**
(21) Anmeldenummer: 17726935.4
(22) Anmeldetag: 30.05.2017
(51) Int. Cl.: G05B 19/042, B29C 45/17

(54) **PRODUKTIONSANLAGE ZUM HERSTELLEN EINER VIELZAHL VON ARTIKELN UND VERFAHREN ZUM STEUERN UND/ODER ÜBERWACHEN DER PRODUKTIONSANLAGE**
PRODUCTION PLANT FOR PRODUCING A MULTIPLICITY OF ARTICLES, AND METHOD FOR CONTROLLING AND/OR MONITORING THE PRODUCTION PLANT
INSTALLATION DE PRODUCTION POUR LA FABRICATION D'UN GRAND NOMBRE D'ARTICLES ET PROCÉDÉ DE COMMANDE ET/OU DE SURVEILLANCE DE L'INSTALLATION DE PRODUCTION

(30) Priorität: 01.06.2016 DE 102016209583
(43) Veröffentlichungstag der Anmeldung: 10.04.2019
(73) Patentinhaber: Phoenix Contact GmbH & Co. KG, 32825 Blomberg (DE)
(72) Erfinder: SCHÜTZ, Alexander, 32825 Blomberg (DE); FALTINSKI, Sebastian, 32657 Lemgo (DE); BESTER, Marco, 32657 Lemgo (DE); OBLOTZKI, Jörg, 32107 Bad Salzuflen (DE)
(74) Vertreter: Richly & Ritschel Patentanwälte PartG mbB
(86) Internationale Anmeldenummer: PCT/EP2017/063046
(87) Internationale Veröffentlichungsnummer: WO 2017/207575

(56) Entgegenhaltungen:
- WO-A1-2005/001741
- WO-A1-2012/012581
- WO-A1-2012/162014
- KR-A- 20120 062 961
- US-A1- 2004 022 227
- US-A1- 2004 022 227
- US-A1- 2011 106 288
- US-A1- 2011 106 288

## Beschreibung

Die vorliegende Erfindung betrifft eine Produktionsanlage zum Herstellen einer Vielzahl von Artikeln. Ferner betrifft die vorliegende Erfindung ein Verfahren zum Steuern und/oder zum Überwachen einer Produktionsanlage zum Herstellen einer Vielzahl von Artikeln.

Im Folgenden wird das erfindungsgemäße Verfahren anhand einer Produktionsanlage zum Herstellen von spritzgegossenen Artikeln exemplarisch beschrieben. Die Produktionsanlage weist dabei eine als Spritzgießmaschine ausgebildete Werkzeugmaschine auf. Das erfindungsgemäße Verfahren ist selbstverständlich auch auf andere Produktionsanlagen anwendbar.

Aus der DE 10 2013 109 910 A1 ist es bekannt, innerhalb einer Spritzgussmaschine ein RFID-Lesegerät anzuordnen, mittels dem Werkzeugmaschinenteile innerhalb der Spritzgussmaschine identifizierbar sind. Dazu weisen die in die Spritzgussmaschine einsetzbaren und beispielsweise als Spritzgussformen ausgebildete Werkzeugmaschinenteile RFID-Transponder auf, so dass mittels des RFID-Lesegeräts feststellbar ist, welche Spritzgussformen in der Spritzgussmaschine eingebaut sind. US2011/106288 zeigt ein Verfahren zum Steuern/Überwachen einer Produktionsanlage unter Benutzung von RFID-markierten Gegenständen.

Um eine entsprechende aus dem Stand der Technik bekannte Spritzgussmaschine betriebs- und produktionsbereit zu machen, muss zuerst bestimmt werden, was für ein Spritzgussartikel hergestellt werden soll. Anschließend werden die für die Herstellung dieser Spritzgussartikel notwendigen Spritzgussformen identifiziert. Die Spritzgussformen sind üblicherweise in einem Lager der Produktionsanlage gelagert und müssen von einem Mitarbeiter im Lager gesucht und aus dem Lager heraus befördert werden. Im Anschluss daran werden die Spritzgussformen üblicherweise mittels eines Gabelstaplers an die Position der Spritzgussmaschine befördert, woraufhin die Spritzgussformen durch entsprechend geschultes Personal in die die Spritzgussmaschine eingebaut werden. Anschließend werden durch das Personal die Betriebsparameter, so wie beispielsweise die notwendige Materialmenge, das Artikelvolumen, das Schussgewicht, ein Temperierplan, die Produktionsmenge usw. eingestellt.

Es ist ersichtlich, dass bei der aus der DE 10 2013 109 910 A1 bekannten Spritzgussmaschine die einzelnen Arbeitsschritte sequentiell durch das Bedienpersonal der Spritzgussmaschine ausgeführt werden. Beispielsweise werden erst nach dem Einbau der Spritzgussformen in die Spritzgussmaschine die zum Herstellen eines Spritzgussartikels notwendigen Betriebsparameter eingestellt. Dies führt zu einer erheblichen Verzögerung, bis die Produktion der herzustellenden Spritzgussartikel mittels der Spritzgussmaschine anlaufen kann.

Der vorliegenden Erfindung liegt die Aufgabe zugrunde, ein Verfahren zum Steuern und/oder zum Überwachen einer Produktionsanlage zum Herstellen einer Vielzahl von Artikeln bereitzustellen, durch das die Auslastung der Produktionsanlage verbessert werden kann.

Die der vorliegenden Erfindung zugrundeliegende Aufgabe wird durch das in Anspruch 1 beschriebene Verfahren gelöst. Vorteilhafte Ausgestaltungen des Verfahrens sind in den von Anspruch 1 abhängigen Verfahren beschrieben. Anspruch 6 offenbart eine entsprechende Produktionsanlage.

Das erfindungsgemäße Verfahren bietet den Vorteil, dass eine Bewegung eines Werkzeugmaschinenteils ermittelt werden kann, sodass basierend auf einer Veränderung des Standortes des Werkzeugmaschinenteils oder basierend auf einer Beibehaltung des Standortes eines Werkzeugmaschinenteils ein Steuerungssignal ausgegeben werden kann.

Bei dem Steuerungssignal kann es sich beispielsweise um ein Steuerungssignal zum Öffnen einer Tür oder eines Tores oder Ähnliches der Produktionsanlage handelt, so dass das Werkzeugteil von einem Abschnitt der Produktionsanlage durch die Tür in einen anderen Abschnitt der Produktionsanlage befördert werden kann. Ferner kann es sich bei dem Steuerungssignal beispielsweise um eine Temperatureinstellung der Werkzeugmaschine handeln. Ferner ist es auch möglich, dass mittels des Steuerungssignals ein Abholauftrag für das Werkzeugmaschinenteil von einem bestimmten Ort der Produktionsanlage handelt. Hinsichtlich der Steuerungssignale bestehen insofern keinerlei Einschränkungen.

Bei den Verfahrensschritten zum Bestimmen der Standorte des Werkzeugmaschinenteils werden die Standorte zu einem ersten Zeitpunkt und seinem Zeiten Zeitpunkt bestimmt und anschließend der Steuerungseinrichtung zur Weiterverarbeitung über eine Datenleitung übertragen.

Bei der Werkzeugmaschine kann es sich beispielsweise um eine Spritzgießmaschine bzw. Spritzgussmaschine handeln. Bei dem Werkzeugteil kann es sich entsprechend um ein Spritzgusswerkzeug bzw. ein Kunststoffwerkzeug handeln. Bei einer entsprechenden Ausbildung der Produktionsanlage mit als Spritzgießmaschine ausgebildeter Werkzeugmaschine und als Spritzgusswerkzeug ausgebildeten Werkzeugmaschinenteil erfolgt die Wechselwirkung des Werkzeugmaschinenteils mit der Werkzeugmaschine durch Einbau des Werkzeugmaschinenteils in die Werkzeugmaschine und durch Injizieren einer Spritzgussmasse in das Werkzeugmaschinenteil.

Vorzugsweise ist die Steuerungseinrichtung auch mit der Werkzeugmaschine über eine Datenleitung verbunden. Bei den Datenleitungen handelt es sich vorzugsweise um drahtlose Datenleitungen. Weiter vorzugsweise sind auf den mit den Werkzeugteilen verbundenen RFID-Transpondern Werkzeugteil spezifische Informationen gespeichert, die mittels der RFID-Leseeinrichtungen auslesbar und an die Steuerungseinrichtung übertragbar sind. Alternativ oder zusätzlich zu der Speicherung der Werkzeugteil spezifischen Informationen auf den RFID-Transpondern können die Werkzeugteil spezifischen Informationen in einem Datenbanksystem abgespeichert sein. Diese im Datenbanksystem gespeicherten Daten sind mit den RFID-Transpondern verknüpft. Es kann beispielsweise lediglich eine eineindeutige ID des RFID-Transponders ausgelesen werden.

Für den Fall, dass die Produktionsanlage eine Vielzahl von Werkzeugmaschinenteilen aufweist, weist die Produktionsanlage vorzugsweise eine der Anzahl der Werkzeugmaschinenanteile entsprechende Anzahl von RFID-Transpondern auf, die jeweils mit einem Werkzeugmaschinenteil verbunden sind. Die Verbindung eines RFID-Transponders mit einem Werkzeugmaschinenteil kann beispielsweise durch Aufnehmen des RFID-Transponders in einer Kavität des Werkzeugmaschinenteils realisiert sein. Ferner ist es auch möglich, dass die RFID-Transponder mit den jeweiligen Werkzeugmaschinenteilen durch eine Verklebung, eine Verschweißung oder durch eine formschlüssige Verbindung verbunden sind.

Das erfindungsgemäße Verfahren ist in Anspruch 1 definiert und derart ausgebildet, dass ein Steuerungssignal in Abhängigkeit des ersten Standortes und des zweiten Standortes des Werkzeugteils ausgegeben wird, indem mittels des ersten Standortes und des zweiten Standortes des Werkzeugteils eine Bewegungstrajektorie bzw. eine Bewegungsrichtung des Werkezugmaschinenteils ermittelt wird. Wenn beispielsweise mittels dieser Bewegungsrichtung ermittelt wird, dass sich das Werkzeugteil auf die Werkzeugmaschine zu bewegt, kann beispielsweise ein Steuerungssignal zum Aufheizen bzw. Vorwärmen der Werkzeugmaschine ausgegeben werden.

Vorzugsweise ist das Verfahren derart ausgebildet, dass das Ausgeben eines Steuersignals zusätzlich in Abhängigkeit einer Zeitdifferenz zwischen dem ersten Zeitpunkt und dem zweiten Zeitpunkt.

Das entsprechend ausgebildete Verfahren bietet den Vorteil, dass zusätzlich zu der Bewegungsrichtung auch die Bewegungsgeschwindigkeit des Werkzeugmaschinenteils bestimmt werden kann. So lässt sich beispielsweise der Zeitpunkt ermitteln, wann das Werkzeugmaschinenteil an der Werkzeugmaschine ankommt, sodass im Vorfeld entsprechende Störungssignale zur Vorbereitung eines Produktionsprozesses ausgegeben werden können. Dadurch wird eine verbesserte Nutzung der Produktionsanlage ermöglicht.

Weiter vorzugsweise ist das Verfahren dazu ausgebildet, bei einer Produktionsanlage mit zumindest zwei Werkzeugmaschinenteilen, die jeweils mit einem RFID-Transponder verbunden sind und die mit der Werkzeugmaschine zum Produzieren eines Artikels wechselwirken, folgende Verfahrensschritte auszuführen:
- Bestimmen der Standorte der Werkzeugmaschinenteile (11, 12) zu einem ersten Zeitpunkt mittels der ersten RFID-Leseeinrichtung und/oder mittels der zweiten RFID-Leseeinrichtung;
- Bestimmen der Standorte der Werkzeugmaschinenteile (11, 12) zu einem zweiten Zeitpunkt der, dem ersten Zeitpunkt zeitlich nachfolgend ist, mittels der ersten RFID-Leseeinrichtung und/oder mittels der zweiten RFID-Leseeinrichtung; und
- Ausgeben von zumindest einem Steuerungssignal mittels der Steuerungseinrichtung in Abhängigkeit der Standorte der Werkzeugmaschinenteile (11, 12) zu dem ersten Zeitpunkt und zu dem zweiten Zeitpunkt.

Das entsprechend ausgebildete Verfahren bietet den Vorteil, dass in Abhängigkeit der Bewegungsrichtungen des ersten Werkzeugmaschinenteils und des zweiten Werkzeugmaschinenteils unterschiedliche Steuerungssignale an die Produktionsanlage ausgegeben werden können. Dadurch können unterschiedlichen Situationen Rechnung getragen werden, sodass die Produktionsanlage noch effektiver nutzbar ist.

Vorzugsweise ist das Verfahren dazu ausgebildet, bei einer Produktionsanlage, bei der auf den RFID-Transpondern Werkzeugmaschinenteil spezifische Informationen gespeichert sind, die durch die RFID-Leseeinrichtungen auslesbar sind, das Ausgeben des zumindest einen Steuerungssignals mittels der Steuerungseinrichtung in Abhängigkeit der Werkzeugmaschinenteil spezifischen Informationen auszugeben.

Das entsprechend ausgebildete Verfahren bietet den Vorteil, dass beispielsweise die Werkzeugmaschine noch gezielter auf den bevorstehenden Produktionsprozess vorbereitet werden kann. So können beispielsweise Werkzeugmaschinenteil spezifische Informationen und somit Artikel spezifische Informationen wie beispielsweise die notwendige Materialmenge zum Herstellen des Artikels, das Artikelvolumen des herzustellenden Artikels, das Schussgewicht des herzustellenden Artikels, eine geforderte Zykluszeit des herzustellenden Artikels, ein Temperierplan zum Herstellen des Artikels und ähnliche weitere Informationen mittels Steuerungssignale an die Werkzeugmaschine gesendet werden.

Weiter bevorzugt ist das Verfahren dazu ausgebildet, bei einer Produktionsanlage, bei der innerhalb der Werkzeugmaschine und/oder benachbart zu der Werkzeugmaschine eine dritte RFID-Leseeinrichtung angeordnet ist, das Ausgeben des zumindest einen Steuersignals mittels der Steuerungseinrichtung in Abhängigkeit von mittels der dritten RFID-Leseeinrichtung ermittelten Informationen auszugeben.

Gemäß der Erfindung ist das Verfahren dadurch gekennzeichnet, dass eine Bewegungsrichtung von zumindest einem Werkzeugmaschinenteil basierend auf dessen ersten Standort und dessen zweiten Standort mittels der Steuerungseinrichtung bestimmt wird, und dass zumindest ein Steuersignal in Abhängigkeit der Bewegungsrichtung des zumindest einen Werkzeugmaschinenteils ausgegeben wird.

Gemäß der Erfindung ist das Verfahren dadurch gekennzeichnet, dass eine Bewegungsgeschwindigkeit von zumindest einem Werkzeugmaschinenteil basierend auf dessen ersten Standort, dessen zweiten Standort und einer Zeitdifferenz zwischen dem ersten Zeitpunkt und dem zweiten Zeitpunkt mittels der Steuerungseinrichtung bestimmt wird, und dass das zumindest eine Steuersignal in Abhängigkeit der Bewegungsgeschwindigkeit des zumindest einen Werkzeugmaschinenteils ausgegeben wird.

Die der vorliegenden Erfindung zugrundeliegende Aufgabe wird ferner durch eine Produktionsanlage zum Herstellen einer Vielzahl von Artikeln gelöst, wobei die Produktionsanlage ein Verfahren nach einem der Ansprüche 1 oder 2 ausführt.

Vorzugsweise ist die Produktionsanlage derart ausgebildet, dass diese zumindest zwei Werkzeugmaschinenteile, die mit der Werkzeugmaschine zum Produzieren eines Artikels wechselwirken und zumindest zwei jeweils mit einem Werkzeugmaschinenteil verbundenen RFID-Transpondern aufweist, wobei die Produktionsanlage dadurch gekennzeichnet ist, dass die Produktionsanlage ein Verfahren nach einem der Ansprüche 1, 2, oder 3 ausführt.

Weiter vorzugsweise ist die Produktionsanlage derart ausgebildet, dass auf den RFID-Transpondern Werkzeugmaschinenteil spezifische Informationen gespeichert sind, die durch die RFID-Leseeinrichtungen auslesbar sind, wobei die Produktionsanlage dadurch gekennzeichnet ist, dass die Produktionsanlage ein Verfahren nach einem der Ansprüche 1-4 ausführt.

Gemäß einer weiteren bevorzugten Ausführung ist die Produktionsanlage derart ausgebildet, dass innerhalb der Werkzeugmaschine und/oder benachbart zu der Werkzeugmaschine eine dritte RFID-Leseeinrichtung angeordnet ist, wobei die Produktionsanlage dadurch gekennzeichnet ist, dass die Produktionsanlage ein Verfahren nach einem der Ansprüche 1 bis 5 ausführt.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine erfindungsgemäße Produktionsanlage in einem ersten Zustand;
- Figur 2:: die in Figur 1 dargestellte Produktionsanlage in einem zweiten Zustand;
- Figur 3:: die in den Figur 1 und 2 dargestellte Produktionsanlage in einem dritten Zustand; und
- Figur 4:: die in den Figur 1 bis 3 dargestellte Produktionsanlage in einem vierten Zustand.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben wurden, auch separat in anderen Ausführungsformen verwendbar.

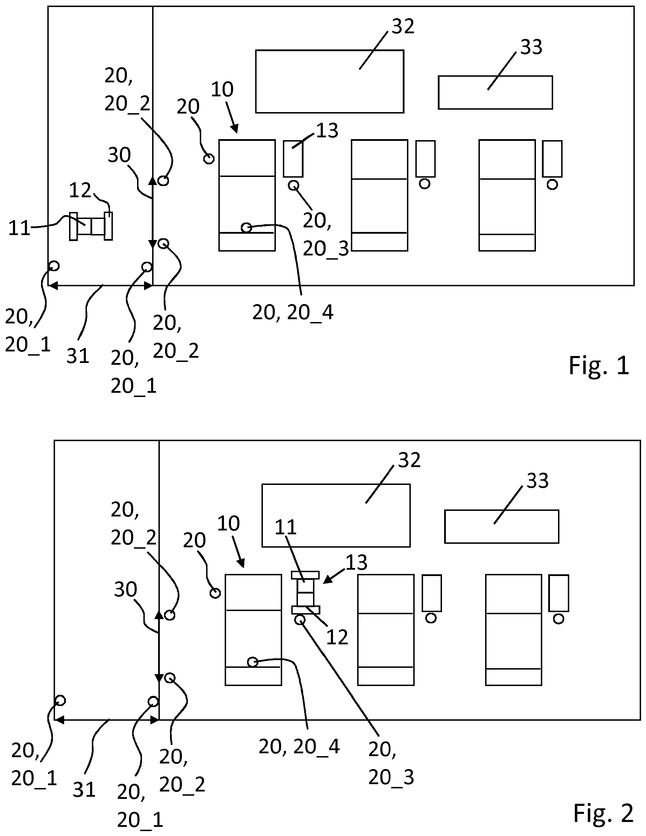

In den Figuren 1 bis 4 ist eine erfindungsgemäße Produktionsanlage zum Herstellen einer Vielzahl von Artikeln in unterschiedlichen Zuständen dargestellt, die zum Ausführen des erfindungsgemäßen Verfahrens ausgebildet ist. In dem dargestellten Ausführungsbeispiel ist die Produktionsanlage zum Herstellen von Spritzgussteilen ausgebildet. Zu diesem Zweck weist die Produktionsanlage eine Vielzahl von als Spritzgießmaschinen 10 ausgebildete Werkzeugmaschinen 10 auf, die in einer Produktionshalle der Produktionsanlage angeordnet sind. Die Produktionshalle ist über eine Rolltor 31 und über Türen 30 zugänglich, durch die beispielsweise als Spritzgusswerkzeuge 11, 12 ausgebildete Werkzeugmaschinenteile 11, 12 in die Produktionshalle transportierbar sind.

Die Produktionsanlage weist eine Vielzahl von RFID-Leseeinrichtungen 20, 20_1, 20_2, 20_3, 20_4 auf, die an unterschiedlichen Standorten zueinander beabstandet angeordnet sind. Dabei sind erste RFID-Leseeinrichtungen 20_1 zu dem Tor 31 benachbart angeordnet. Zweite RFID-Leseeinrichtungen 20_2 sind benachbart zu der Tür 30 angeordnet. Eine dritte RFID-Leseeinrichtungen 20_3 ist benachbart zu einem Bereitstellungsplatz 13 der Spritzgießmaschine 10 angeordnet. Eine vierte RFID-Leseeinrichtungen 20_4 ist innerhalb der Spritzgießmaschine 10 angeordnet.

Das Werkzeugmaschinenteil 11 ist als Auswurfseite des Werkzeugmaschinenteils ausgebildet, und das Werkzeugmaschinenteil 12 ist als Düsenseite des Werkzeugmaschinenteils ausgebildet. Die Werkzeugmaschinenteile 11, 12 sind jeweils mit einem RFID-Transponder versehen, die in den Figuren nicht dargestellt sind. Die RFID-Transponder sind mittels sämtlicher RFID-Leseeinrichtungen 20 auslesbar. Somit sind die Positionen der Werkzeugmaschinenteile 11, 12 mittels der RFID-Leseeinrichtungen 20 bestimmbar.

Die erfindungsgemäße Produktionsanlage weist ferner eine in den Figuren nicht dargestellte Steuerungseinrichtung auf, die mit sämtlichen RFID-Leseeinrichtungen 20, 20_1, 20_2, 20_3, 20_4 über in den Figuren nicht dargestellte Datenleitungen verbunden sind. Bei den Datenleitungen handelt es sich vorzugsweise um drahtlose Datenleitungen.

Die Produktionsanlage und die Steuerungseinrichtung sind dazu ausgebildet, die Standorte der Werkzeugmaschinenteile 11, 12 zu einem ersten Zeitpunkt und zu einem zweiten Zeitpunkt zu bestimmen. Folglich lässt sich eine Bewegungsrichtung der Werkzeugmaschinenteile 11, 12 ermitteln. Die Steuerungseinrichtung ist ferner dazu ausgebildet, in Abhängigkeit der ersten und zweiten Positionen der Werkzeugmaschinenteile 11, 12 Steuerungssignale auszugeben. Bei den Steuerungssignalen kann es sich beispielsweise um ein Steuerungssignal zum Öffnen und/oder Schließen des Tors 31, zum Öffnen und/oder Schließen der Tür 30, zum Temperier der Spritzgießmaschine 10, usw. handeln.

In Figur 1 ist ein Zustand der Produktionsanlage dargestellt, in dem die Werkzeugmaschinenteile 11, 12 durch Bedienpersonal beispielsweise mittels eines Staplers durch das Tor 31 in eine Vorhalle der Produktionshalle transportiert wurden. Die Position der Werkzeugmaschinenteile 11, 12 wird mittels der ersten RFID-Leseeinrichtungen 20_1 zu einem ersten Zeitpunkt bestimmt. Anschließend werden die Werkzeugmaschinenteile 11, 12 zu dem Bereitstellungsplatz 13 der Spritzgießmaschine 10 transportiert. Dabei passieren die Werkzeugmaschinenteile die Tür 30, so dass die Position der Werkzeugmaschinenteile 11, 12 zu einem zweiten Zeitpunkt durch die der Tür 30 benachbarte RFID-Leseeinrichtungen 20_2 bestimmt werden. Die Steuerungseinrichtung ist dazu ausgebildet, basierend auf den ersten Standorten, den zweiten Standorten und einer Zeitdifferenz zwischen dem ersten Zeitpunkt und dem zweiten Zeitpunkt eine Bewegungsrichtung und eine Bewegungsgeschwindigkeit der Werkzeugmaschinenteile 11, 12 zu ermitteln. Basierend auf dieser Bewegungsrichtung der Werkzeugmaschinenteile 11, 12 und gegebenenfalls basierend auf der Bewegungsgeschwindigkeit der Werkzeugmaschinenteile 11, 12 werden Steuerungssignale an die Spritzgießmaschine 10 ausgegeben. Bei diesen Steuerungssignalen kann es sich beispielsweise um eine notwendige Materialmenge zum Herstellen eines Artikels, um ein Artikelvolumen des herzustellenden Artikels, um ein Schussgewicht des herzustellenden Artikels, um ein Temperierplan für die Spritzgießmaschine usw. handeln.

Zu einem dritten Zeitpunkt wird die Position der Werkzeugmaschinenteile 11, 12 mittels der dritten RFID-Leseeinrichtungen 20_3 an dem Bereitstellungsplatz 13 festgestellt. Diese detektierte Position kann dazu genutzt werden, ein Steuerungssignal auszugeben, um einen Arbeiter darüber zu informieren, dass die Spritzgießmaschine bereit ist zum Einbau der Spritzgusswerkzeuge 11, 12.

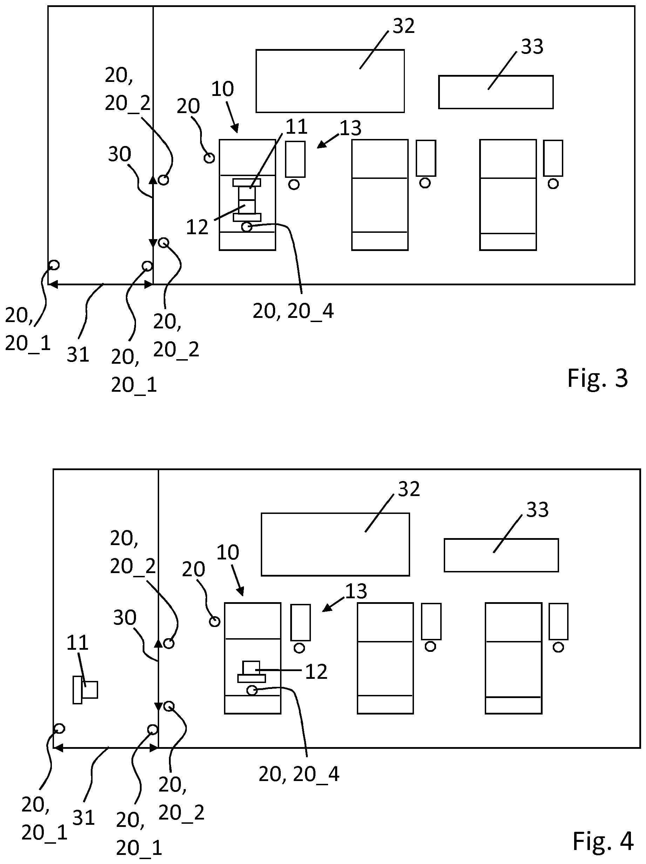

In Figur 3 ist die Produktionsanlage in den Zustand dargestellt, in dem die Spritzgusswerkzeuge 11, 12 in der Spritzgießmaschine 10 eingebaut sind. Es kann nun ein Steuerungssignal ausgegeben werden, mittels dem die Produktion von Spritzgussteilen gestartet wird.

Aus Figur 4 ist ein Zustand ersichtlich, aus dem die Auswurfseite des Werkzeugmaschinenteils 11 aus der Spritzgießmaschine 10 entfernt wurde und durch die Tür 30 in eine Vorhalle der Produktionshalle befördert wurde. Die RFID-Leseeinrichtungen 20 erkennen, dass die Düsenseite des Werkzeugmaschinenteils 12 in der Spritzgießmaschine 10 verbleibt, wohingegen die Auswurfseite des Werkzeugmaschinenteils 11 aus der Spritzgießmaschine 10 entfernt und durch die Tür 30 in die Vorhalle der Produktionshalle transportiert wurde. Entsprechend kann dann ein Steuerungssignal ausgegeben werden, mittels dem beispielsweise Personal mitgeteilt wird, dass eine Produktion zu diesem Zeitpunkt nicht zulässig ist. Ferner kann ein Steuerungssignal ausgegeben werden, dass eine Meldung ein einen Mechaniker ausgibt, dass eine Werkzeughälfte in der Spritzgießmaschine 10 erwartet wird.

### Bezugszeichenliste

- 10: Werkzeugmaschine / Spritzgießmaschine
- 11: (erstes) Werkzeugmaschinenteil / Spritzgusswerkzeug / Kunststoffwerkzeug / Auswurfseite des Werkzeugmaschinenteils
- 12: (zweites) Werkzeugmaschinenteil / Spritzgusswerkzeug / Kunststoffwerkzeug / Düsenseite des Werkzeugmaschinenteils
- 13: Bereitstellungsplatz (der Werkzeugmaschine)
- 20, 20_1: (erste) RFID-Leseeinrichtung
- 20, 20_2: (zweite) RFID-Leseeinrichtung
- 20, 20_3: (dritte) RFID-Leseeinrichtung
- 30: Tür
- 31: Rolltor
- 32: Materiallager
- 33: Trockner

## Patentansprüche

1. Verfahren zum Steuern und/oder zum Überwachen einer Produktionsanlage zum Herstellen einer Vielzahl von Artikeln, wobei die Produktionsanlage folgendes aufweist:
- zumindest eine Werkzeugmaschine (10);
- zumindest ein Werkzeugmaschinenteil (11, 12), das mit der zumindest einen Werkzeugmaschine (10) zum Produzieren eines Artikels wechselwirkt;
- zumindest einen mit dem zumindest einen Werkzeugmaschinenteil (11, 12) verbundenen RFID-Transponder;
- zumindest zwei RFID-Leseeinrichtungen (20; 20_1, 20_2, 20_3, 20_4), die zueinander und zu der mindestens einen-Werkzeugmaschine (10) beabstandet angeordnet sind; und
- zumindest eine Steuerungseinrichtung, die mit den RFID-Leseeinrichtungen (20; 20_1, 20_2, 20_3, 20_4) über Datenleitungen verbunden ist,
wobei das Verfahren die folgenden Verfahrensschritte aufweist:
- Bestimmen eines ersten Standortes des mit dem zumindest einen Werkzeugmaschinenteils (11, 12) verbundenen zumindest einen RFID-Transponders zu einem ersten Zeitpunkt mittels der ersten RFID-Leseeinrichtung (20; 20_1, 20_2, 20_3, 20_4);
- Bestimmen eines zweiten Standortes des mit zumindest einen Werkzeugmaschinenteils (11, 12) verbundenen zumindest einen RFID-Transponders zu einem zweiten Zeitpunkt der, dem ersten Zeitpunkt zeitlich nachfolgend ist, mittels der zweiten RFID-Leseeinrichtung (20; 20_1, 20_2, 20_3, 20_4); und
- Ausgeben von zumindest einem Steuerungssignal mittels der zumindest einen Steuerungseinrichtung in Abhängigkeit des ersten Standortes und des zweiten Standortes,
**gekennzeichnet durch** die folgenden Verfahrensschritte:
- Bestimmen einer Bewegungsrichtung des zumindest einen Werkzeugmaschinenteils (11, 12) basierend auf dessen ersten Standort und dessen zweiten Standort mittels der Steuerungseinrichtung; und
- Ausgeben des zumindest einen Steuersignals in Abhängigkeit der Bewegungsrichtung des zumindest einen Werkzeugmaschinenteils (11, 12),
- Bestimmen einer Bewegungsgeschwindigkeit des zumindest einen Werkzeugmaschinenteils (11, 12) basierend auf dessen ersten Standort, dessen zweiten Standort und einer Zeitdifferenz zwischen dem ersten Zeitpunkt und dem zweiten Zeitpunkt mittels der Steuerungseinrichtung; und
- Ausgeben des zumindest einen Steuersignals in Abhängigkeit der Bewegungsgeschwindigkeit des zumindest einen Werkzeugmaschinenteils (11, 12).

2. Verfahren nach Anspruch 1, **dadurch gekennzeichnet, dass** das Ausgeben eines Steuersignals zusätzlich in Abhängigkeit einer Zeitdifferenz zwischen dem ersten Zeitpunkt und dem zweiten Zeitpunkt erfolgt.

3. Verfahren nach einem der vorhergehenden Ansprüche, wobei die Produktionsanlage zumindest zwei Werkzeugmaschinenteile (11, 12) aufweist, die jeweils mit einem RFID-Transponder verbunden sind und die mit der Werkzeugmaschine (10) zum Produzieren eines Artikels wechselwirken, **gekennzeichnet durch** die folgenden Merkmale:
- Bestimmen der Standorte der Werkzeugmaschinenteile (11, 12) zu einem ersten Zeitpunkt mittels der ersten RFID-Leseeinrichtung (20; 20_1, 20_2, 20_3, 20_4) und/oder mittels der zweiten RFID-Leseeinrichtung (20; 20_1, 20_2, 20_3, 20_4);
- Bestimmen der Standorte der Werkzeugmaschinenteile (11, 12) zu einem zweiten Zeitpunkt der, dem ersten Zeitpunkt zeitlich nachfolgend ist, mittels der ersten RFID-Leseeinrichtung (20; 20_1, 20_2, 20_3, 20_4) und/oder mittels der zweiten RFID-Leseeinrichtung (20; 20_1, 20_2, 20_3, 20_4); und
- Ausgeben von zumindest einem Steuerungssignal mittels der Steuerungseinrichtung in Abhängigkeit der Standorte der Werkzeugmaschinenteile (11, 12) zu dem ersten Zeitpunkt und zu dem zweiten Zeitpunkt.

4. Verfahren nach einem der vorhergehenden Ansprüche, wobei auf den RFID-Transpondern Werkzeugmaschinenteil (11, 12) spezifische Informationen gespeichert sind, die durch die RFID-Leseeinrichtungen (20; 20_1, 20_2, 20_3, 20_4) auslesbar sind, **dadurch gekennzeichnet, dass** das Ausgeben des zumindest einen Steuerungssignals mittels der Steuerungseinrichtung in Abhängigkeit der Werkzeugmaschinenteil (11, 12) spezifischen Informationen ausgegeben wird.

5. Verfahren nach einem der vorhergehenden Ansprüche, wobei innerhalb der Werkzeugmaschine (10) und/oder benachbart zu der Werkzeugmaschine (10) eine dritte RFID-Leseeinrichtung (20; 20_1, 20_2, 20_3, 20_4) angeordnet ist, **dadurch gekennzeichnet, dass** das Ausgeben des zumindest einen Steuersignals mittels der Steuerungseinrichtung in Abhängigkeit von mittels der dritten RFID-Leseeinrichtung (20; 20_1, 20_2, 20_3, 20_4) ermittelten Informationen ausgegeben wird.

6. Produktionsanlage zum Herstellen einer Vielzahl von Artikeln, wobei die Produktionsanlage folgendes aufweist:
- zumindest eine Werkzeugmaschine (10);
- zumindest ein Werkzeugmaschinenteil (11, 12), das mit der Werkzeugmaschine (10) zum Produzieren eines Artikels wechselwirkt;
- zumindest einen mit dem Werkzeugmaschinenteil (11, 12) verbundenen RFID-Transponder;
- zumindest zwei RFID-Leseeinrichtungen (20; 20_1, 20_2, 20_3, 20_4), die zueinander und zu der Werkzeugmaschine (10) beabstandet angeordnet sind; und
- zumindest eine Steuerungseinrichtung, die mit den RFID-Leseeinrichtungen (20; 20_1, 20_2, 20_3, 20_4) über Datenleitungen verbunden ist,
wobei die Produktionsanlage **dadurch gekennzeichnet ist, dass** die Produktionsanlage dazu eingerichtet ist, ein Verfahren nach einem der Ansprüche 1 oder 2 auszuführen.

7. Produktionsanlage nach Anspruch 6, wobei die Produktionsanlage zumindest zwei Werkzeugmaschinenteile (11, 12), die mit der zumindest einen Werkzeugmaschine (10) zum Produzieren eines Artikels wechselwirken und zumindest zwei jeweils mit einem Werkzeugmaschinenteil (11, 12) verbundene RFID-Transponder aufweist, wobei die Produktionsanlage **dadurch gekennzeichnet ist, dass** die Produktionsanlage dazu eingerichtet ist, ein Verfahren nach einem der Ansprüche 1, 2 oder 3 auszuführen.

8. Produktionsanlage nach Anspruch 6, wobei auf dem zumindest einen RFID-Transponder Werkzeugmaschinenteil (11, 12) spezifische Informationen gespeichert sind, die durch die RFID-Leseeinrichtungen (20; 20_1, 20_2, 20_3, 20_4) auslesbar sind, wobei die Produktionsanlage **dadurch gekennzeichnet ist, dass** die Produktionsanlage dazu eingerichtet ist, ein Verfahren nach einem der Ansprüche 1, 2, 3 oder 4auszuführen.

9. Produktionsanlage nach zumindest einem der Ansprüche 6 bis 8, wobei innerhalb der Werkzeugmaschine (10) und/oder benachbart zu der Werkzeugmaschine (10) eine dritte RFID-Leseeinrichtung (20; 20_1, 20_2, 20_3, 20_4) angeordnet ist, wobei die Produktionsanlage **dadurch gekennzeichnet ist, dass** die Produktionsanlage dazu eingerichtet ist, ein Verfahren nach einem der Ansprüche 1 bis 5 auszuführen.

## Claims

1. A method for controlling and/or monitoring a production plant for producing a multiplicity of articles, wherein the production plant has the following:
- at least one machine tool (10);
- at least one machine tool part (11, 12) which interacts with the at least one machine tool (10) for producing an article;
- at least one RFID transponder which is connected to the at least one machine tool part (11, 12);
- at least two RFID reading devices (20; 20_1, 20_2, 20_3, 20_4) which are arranged at a distance from one another and from the at least one machine tool (10); and
- at least one control device which is connected to the RFID reading devices (20; 20_1, 20_2, 20_3, 20_4) via data lines,
wherein the method has the following method steps of:
- determining a first location of the at least one machine tool part (11, 12) connected to the at least one RFID transponder at a first time by means of the first RFID reading device (20; 20_1, 20_2, 20_3, 20_4) and/or by means of the second RFID reading device (20; 20_1, 20_2, 20_3, 20_4);
- determining a second location of the at least one machine tool part (11, 12) connected to the at least one RFID transponder at a second time, which temporally follows the first time, by means of the second RFID reading device (20; 20_1, 20_2, 20_3, 20_4); and
- outputting at least one control signal by means of the at least one control device on the basis of the first location and the second location, **characterized by** the following method steps:
- determining a direction of movement of the at least one machine tool part (11, 12) on the basis of its first location and its second location by means of the control device; and
- outputting the at least one control signal on the basis of the direction of movement of the at least one machine tool part (11, 12),
- determining a speed of movement of the at least one machine tool part (11, 12) on the basis of its first location, its second location and a time difference between the first time and the second time by means of the control device; and
- outputting the at least one control signal on the basis of the speed of movement of the at least one machine tool part (11, 12).

2. The method as claimed in claim 1, **characterized in that** a control signal is additionally output on the basis of a time difference between the first time and the second time.

3. The method as claimed in one of the preceding claims, wherein the production plant has at least two machine tool parts (11, 12) which are each connected to an RFID transponder and interact with the machine tool (10) for producing an article, **characterized by** the following features:
- determining the locations of the machine tool parts (11, 12) at a first time by means of the first RFID reading device (20; 20_1, 20_2, 20_3, 20_4) and/or by means of the second RFID reading device (20; 20_1, 20_2, 20_3, 20_4);
- determining the locations of the machine tool parts (11, 12) at a second time, which temporally follows the first time, by means of the first RFID reading device (20; 20_1, 20_2, 20_3, 20_4) and/or by means of the second RFID reading device (20; 20_1, 20_2, 20_3, 20_4); and
- outputting at least one control signal by means of the control device on the basis of the locations of the machine tool parts (11, 12) at the first time and at the second time.

4. The method as claimed in one of the preceding claims, wherein information which is specific to the machine tool part (11, 12) and can be read by the RFID reading devices (20; 20_1, 20_2, 20_3, 20_4) is stored on the RFID transponders, **characterized in that** the at least one control signal is output by means of the control device on the basis of the information specific to the machine tool part (11, 12).

5. The method as claimed in one of the preceding claims, wherein a third RFID reading device (20; 20_1, 20_2, 20_3, 20_4) is arranged inside the machine tool (10) and/or adjacent to the machine tool (10), **characterized in that** the at least one control signal is output by means of the control device on the basis of information determined by means of the third RFID reading device (20; 20_1, 20_2, 20_3, 20_4).

6. A production plant for producing a multiplicity of articles, wherein the production plant has the following:
- at least one machine tool (10);
- at least one machine tool part (11, 12) which interacts with the machine tool (10) for producing an article;
- at least one RFID transponder which is connected to the machine tool part (11, 12);
- at least two RFID reading devices (20; 20_1, 20_2, 20_3, 20_4) which are arranged at a distance from one another and from the machine tool (10); and
- at least one control device which is connected to the RFID reading devices (20; 20_1, 20_2, 20_3, 20_4) via data lines,
wherein the production plant is **characterized in that** the production plant is configured to carry out a method as claimed in one of claims 1 or 2.

7. The production plant as claimed in claim 6, wherein the production plant has at least two machine tool parts (11, 12) which interact with the at least one machine tool (10) for producing an article, and at least two RFID transponders which are each connected to a machine tool part (11, 12), wherein the production plant is **characterized in that** the production plant is configured to carry out a method as claimed in one of claims 1, 2, or 3.

8. The production plant as claimed in at least either of claims 6, wherein information which is specific to the machine tool part (11, 12) and can be read by the RFID reading devices (20; 20_1, 20_2, 20_3, 20_4) is stored on the RFID transponders, wherein the production plant is **characterized in that** the production plant is configured to carry out a method as claimed in one of claims 1, 2, 3 or 4.

9. The production plant as claimed in at least one of claims 6 to 8, wherein a third RFID reading device (20; 20_1, 20_2, 20_3, 20_4) is arranged inside the machine tool (10) and/or adjacent to the machine tool (10), wherein the production plant is **characterized in that** the production plant is configured to carry out a method as claimed in one of claims 1 to 5.

## Revendications

1. Procédé permettant la commande et/ou la surveillance d'une installation de production pour la fabrication d'une pluralité d'articles, dans lequel l'installation de production présente les éléments suivants :
- au moins une machine-outil (10) ;
- au moins une pièce de machine-outil (11, 12) interagissant avec l'au moins une machine-outil (10) pour produire un article ;
- au moins un transpondeur RFID connecté à l'au moins une pièce de machine-outil (11, 12) ;
- au moins deux dispositifs de lecture RFID (20 ; 20_1, 20_2, 20_3, 20_4) qui sont disposés à distance l'un de l'autre et de l'au moins une machine-outil (10) ; et
- au moins un dispositif de commande qui est connecté aux dispositifs de lecture RFID (20 ; 20_1, 20_2, 20_3, 20_4) par l'intermédiaire de lignes de données,
dans lequel le procédé présente les étapes de procédé suivantes :
- détermination d'un premier emplacement de l'au moins un transpondeur RFID connecté à l'au moins une pièce de machine-outil (11, 12) à un premier instant à l'aide du premier dispositif de lecture RFID (20 ; 20_1, 20_2, 20_3, 20_4) ;
- détermination d'un second emplacement de l'au moins un transpondeur RFID connecté à au moins une pièce de machine-outil (11, 12) à un second instant postérieur au premier instant à l'aide du second dispositif de lecture RFID (20 ; 20_1, 20_2, 20_3, 20_4) ; et
- émission d'au moins un signal de commande au moyen de l'au moins un dispositif de commande en fonction du premier emplacement et du second emplacement, **caractérisé par** les étapes de procédé suivantes :
- détermination d'une direction de mouvement de l'au moins une pièce de machine-outil (11, 12) sur la base de son premier emplacement et de son second emplacement au moyen du dispositif de commande ; et
- émission de l'au moins un signal de commande en fonction de la direction de déplacement de l'au moins une pièce de machine-outil (11, 12),
- détermination d'une vitesse de déplacement de l'au moins une pièce de machine-outil (11, 12) sur la base de son premier emplacement, de son second emplacement et d'une différence de temps entre le premier instant et le second instant au moyen du dispositif de commande ; et
- émission de l'au moins un signal de commande en fonction de la vitesse de déplacement de l'au moins une pièce de machine-outil (11, 12).

2. Procédé selon la revendication 1, **caractérisé en ce que** l'émission d'un signal de commande est en outre effectuée en fonction d'une différence de temps entre le premier instant et le second instant.

3. Procédé selon l'une des revendications précédentes, dans lequel l'installation de production présente au moins deux pièces de machine-outil (11, 12) qui sont respectivement connectées à un transpondeur RFID et qui interagissent avec la machine-outil (10) pour produire un article, **caractérisé par** les caractéristiques suivantes :
- détermination des emplacements des pièces de machine-outil (11, 12) à un premier instant à l'aide du premier dispositif de lecture RFID (20 ; 20_1, 20_2, 20_3, 20_4) et/ou à l'aide du second dispositif de lecture RFID (20 ; 20_1, 20_2, 20_3, 20_4) ;
- détermination des emplacements des pièces de machine-outil (11, 12) à un second instant postérieur au premier instant à l'aide du premier dispositif de lecture RFID (20 ; 20_1, 20_2, 20_3, 20_4) et/ou à l'aide du second dispositif de lecture RFID (20 ; 20_1, 20_2, 20_3, 20_4) ; et
- émission d'au moins un signal de commande à l'aide du dispositif de commande en fonction des emplacements des pièces de machine-outil (11, 12) au premier instant et au second instant.

4. Procédé selon l'une des revendications précédentes, dans lequel des informations spécifiques à une pièce de machine-outil sont stockées sur les transpondeurs RFID (11, 12), lesquelles peuvent être lues par les dispositifs de lecture RFID (20 ; 20_1, 20_2, 20_3, 20_4), **caractérisé en ce que** l'émission de l'au moins un signal de commande est effectuée à l'aide du dispositif de commande en fonction des informations spécifiques à une pièce de machine-outil (11, 12).

5. Procédé selon l'une des revendications précédentes, dans lequel un troisième dispositif de lecture RFID (20 ; 20_1, 20_2, 20_3, 20_4) est disposé à l'intérieur de la machine-outil (10) et/ou adjacent à la machine-outil (10), **caractérisé en ce que** l'émission de l'au moins un signal de commande est effectuée à l'aide du dispositif de commande en fonction d'informations déterminées à l'aide du troisième dispositif de lecture RFID (20 ; 20_1, 20_2, 20_3, 20_4).

6. Installation de production permettant la fabrication d'une pluralité d'articles, dans laquelle l'installation de production présente les éléments suivants :
- au moins une machine-outil (10) ;
- au moins une pièce de machine-outil (11, 12) interagissant avec la machine-outil (10) pour produire un article ;
- au moins un transpondeur RFID connecté à la pièce de machine-outil (11, 12) ;
- au moins deux dispositifs de lecture RFID (20 ; 20_1, 20_2, 20_3, 20_4) qui sont disposés à distance l'un de l'autre et de la machine-outil (10) ; et
- au moins un dispositif de commande qui est connecté aux dispositifs de lecture RFID (20 ; 20_1, 20_2, 20_3, 20_4) par l'intermédiaire de lignes de données,
dans laquelle l'installation de production est **caractérisée en ce que** l'installation de production est configurée pour mettre en œuvre un procédé selon l'une des revendications 1 ou 2.

7. Installation de production selon la revendication 6, dans laquelle l'installation de production présente au moins deux pièces de machine-outil (11, 12) qui interagissent avec l'au moins une machine-outil (10) pour produire un article et au moins deux transpondeurs RFID respectivement connectés à une pièce de machine-outil (11, 12), l'installation de production étant **caractérisée en ce que** l'installation de production est configurée pour mettre en œuvre un procédé selon l'une des revendications 1, 2 ou 3.

8. Installation de production selon la revendication 6, dans laquelle des informations spécifiques à une pièce de machine-outil (11, 12) sont stockées sur l'au moins un transpondeur RFID, lesquelles peuvent être lues par les dispositifs de lecture RFID (20 ; 20_1, 20_2, 20_3, 20_4), l'installation de production étant **caractérisée en ce que** l'installation de production est configurée pour mettre en œuvre un procédé selon l'une des revendications 1, 2, 3 ou 4.

9. Installation de production selon au moins l'une des revendications 6 à 8, dans laquelle un troisième dispositif de lecture RFID (20 ; 20_1, 20_2, 20_3, 20_4) est disposé à l'intérieur de la machine-outil (10) et/ou adjacent à la machine-outil (10), l'installation de production étant **caractérisée en ce que** l'installation de production est configurée pour mettre en œuvre un procédé selon l'une des revendications 1 à 5.
